# EUROPEAN PATENT SPECIFICATION

(11) **EP 4 694 832 B1**
(45) Date of publication and mention of the grant of the patent: **11.11.2026**
(21) Application number: 24716845.3
(22) Date of filing: 12.04.2024
(51) Int. Cl.: A61C 13/00, A61C 8/00

(54) **DENTAL PROSTHESIS**
ZAHNPROTHESE
PROTHÈSE DENTAIRE

(30) Priority: 13.04.2023 EP 23167868
(43) Date of publication of application: 18.02.2026
(73) Proprietor: Fina, Raffaele, 1004 Lausanne (CH)
(72) Inventor: Fina, Raffaele, 1004 Lausanne (CH)
(74) Representative: reuteler & cie SA
(86) International application number: PCT/EP2024/060096
(87) International publication number: WO 2024/213775

(56) References cited:
- US-A- 4 741 698
- US-A- 5 133 662
- US-A1- 2020 046 470

## Description

The present invention relates to a dental prosthesis supported by a dental implant, in particular a full dental prosthesis supported by a plurality of dental implants. A full dental prosthesis replaces all the teeth of a jaw by artificial teeth.

An endosteal implant is an often-used dental implant consisting of a titanium screw surgically placed within the mandible or maxilla (lower or upper jaw). Dental bone grafting prior to the placement of the implant screw is necessary if the bone quality is insufficient. In this type of dental implants, the biting force is transferred from the crowns to the jaw bone via the implants, i.e., these implants are artificial tooth roots. One of the risks of these dental implants is loosening during use. Another risk is a fracture of the jaw bone during installation or use. For example, these risks are increased if the implant screw is placed into a dental alveolus ("tooth socket") with a large diameter, which requires an implant screw with a large diameter.

A subperiosteal implant is an alternative for an endosteal implant in case of insufficient bone quality. A subperiosteal implant comprises a metal implant framework resting directly on top of the bone, underlying the periosteum, and provides attachment posts, which extend through the gingival tissue for prosthesis anchorage.

For a partial dental prosthesis as well as for a full dental prosthesis, it is important that each crown of the dental prosthesis is precisely positioned such that it fits a crown of the opposite jaw. A mispositioning of the crowns of a dental prosthesis can put a high stress on the implants during normal use, which can lead to the loss of the implants. Moreover, the height of the dental prosthesis needs to be corrected if the patient's bone recedes.

Some dental prostheses are fixed to implants and/or natural teeth and cannot be easily and quickly removed. These dental prostheses are typically difficult to clean, in particular between the dental prostheses and the gingiva.

US2020046470A1 relates to a subperiosteal jaw implant and to a method for manufacturing such an implant.

In view of the foregoing, it is an object of the invention to provide a dental prosthesis suitable for patients with a low bone quality of the jaws.

It is advantageous to provide a dental prosthesis which has a long lifetime.

It is advantageous to provide a dental prosthesis with a simple and fast mounting process. It is advantageous to provide a dental prosthesis which can be easily maintained and repaired.

It is advantageous to provide a dental prosthesis with a precise positioning of the crowns. It is advantageous to provide a dental prosthesis with a precise height of the crowns.

It is advantageous to provide a dental prosthesis which can be conveniently cleaned.

Objects of the invention have been achieved by providing a dental prosthesis according to claim 1 and by providing a method for manufacturing a dental prosthesis according to claim 14.

Dependent claims set out various advantageous features of embodiments of the invention.

Disclosed herein is a dental prosthesis comprising a plurality of crowns fixed to a frame and a plurality of dental implants each comprising a support structure for supporting the frame on a surface portion of a jaw bone of a patient, at least one implant screw for fixing the support structure to the jaw bone and a mounting element for mounting the frame to the support structure, wherein the plurality of dental implants is configured to transfer a force from each of the mounting elements in apical direction z- via the support structure onto the surface portion of the jaw bone.

In an advantageous embodiment, each support structure comprises a central portion and lateral portions extending from the central portion in apical direction z-, wherein the mounting element extends from the central portion in coronal direction z+ and wherein the central portion is configured to rest on the jaw bone and the lateral portions are configured to embrace a portion of the jaw bone.

In an advantageous embodiment, each support structure comprises a contact surface configured to conform with the surface portion of the jaw bone.

In an advantageous embodiment, each of the support structures has a length I along a ridge of the jaw bone of at least 10 mm, in particular at least 20 mm, for instance 22 mm.

In an advantageous embodiment, each of the support structures has a height h along an axis z of the plurality of crowns of at least 5 mm, preferably at least 10 mm.

In an advantageous embodiment, the mounting element of each support structure is a screw or a threaded rod with an internal or external thread.

In an advantageous embodiment, the dental prosthesis further comprises matching mounting elements configured to cooperate with the mounting elements of the support structures for mounting the frame to the support structures.

In an advantageous embodiment, the mounting element of each support structure is a screw or a threaded rod with an external thread and each of the matching mounting elements comprises a crown with an internal thread or a screw nut.

In an advantageous embodiment, each of the plurality of crowns comprises an internal thread and is removably fixed to the frame by a screw.

In an advantageous embodiment, the dental prosthesis comprises spacers placed between the support structures and the frame, wherein the mounting elements pass through holes in the spacers.

In an advantageous embodiment, the hole in each spacer is a conical hole configured to conform with a conical portion formed on each mounting element or with a conical portion of an extension screw or with a conical portion of a conical element mounted on each mounting element.

In an advantageous embodiment, each support structure is integrally formed with the mounting element and the conical portion formed on the mounting element.

In an advantageous embodiment, the frame comprises a plane surface and each spacer comprises a plane surface configured to abut the plane surface of the frame.

In an advantageous embodiment, the dental prosthesis comprises a cleaning system comprising at least one tube or at least one channel formed in the frame extending along the frame perpendicular to an axis z of the mounting elements from a first end of the frame to a second end of the frame, the at least one tube or the at least one channel formed in the frame comprising an inlet and a plurality of nozzles.

In an advantageous embodiment, the at least one tube is held by the spacers.

Also disclosed herein is a method for manufacturing a dental prosthesis comprising the steps of
- generating a three-dimensional model of a surface of a jaw bone of a patient; and
- forming each support structure with a contact surface conforming with a different surface portion of the jaw bone.

In an advantageous embodiment, the method further comprises the step of
- calculating a height of each mounting element based on the three-dimensional model of the surface of the jaw bone.

Further advantageous features of the invention will be apparent from the following detailed description of embodiments of the invention and the accompanying illustrations.

### Brief description of the figures

Figure 1a-d are exploded views of a dental prosthesis according to an embodiment of the invention from different perspectives;
Figure 2a is cross-sectional view of a dental prosthesis according to an embodiment of the invention through a mounting element;
Figure 2b is an exploded cross-sectional view of a dental prosthesis according to the embodiment of the invention of figure 2a;
Figure 2c is cross-sectional view of a dental prosthesis according to an embodiment of the invention through a mounting element;
Figure 2d is an exploded cross-sectional view of a dental prosthesis according to the embodiment of the invention of figure 2c;
Figure 2e is cross-sectional view of a dental prosthesis according to an embodiment of the invention through a crown;
Figure 2f is an exploded cross-sectional view of a dental prosthesis according to the embodiment of the invention of figure 2e;

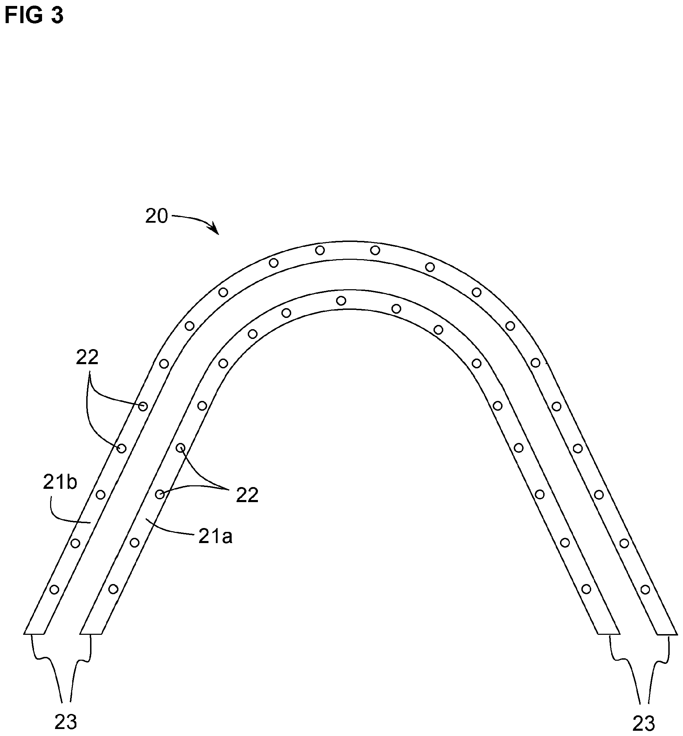

Figure 3 is a schematic view of a cleaning system of a dental prosthesis according to an embodiment of the invention;

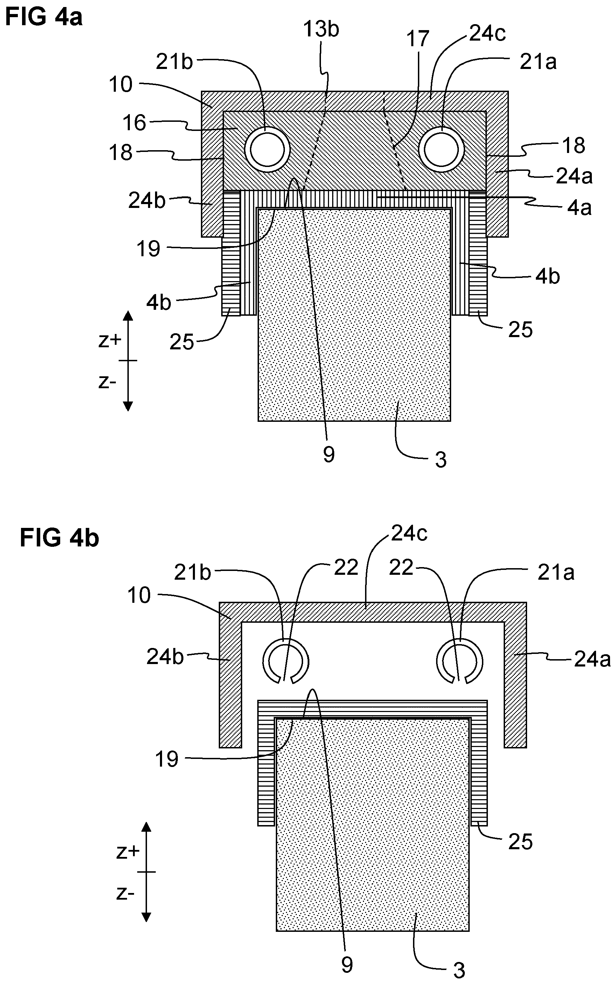

Figures 4a and 4b are cross-sectional views of a portion of a dental prosthesis with a cleaning system according to an embodiment of the invention in front of a spacer and through nozzles of the cleaning system, respectively.

Referring to the figures, a dental prosthesis 1 according to embodiments of the invention comprises a plurality of crowns 11, a frame 10 for supporting the crowns 11 and a plurality of dental implants 2 for supporting the frame 10.

Each of the crowns 11 is separately formed and intended to replace a crown of a natural tooth. In preferred embodiments, the crowns 11 are partially or entirely made of ceramics.

Each of the dental implants 2 comprises a support structure 4 for supporting the frame 10 on a surface portion 9 of a jaw bone 3 of a patient, at least one implant screw 5 for fixing the support structure 4 to the jaw bone 3 and a mounting element 6 for mounting the frame 10 to the support structure 4, wherein the plurality of dental implants 2 is configured to transfer a force from each of the mounting elements 6 in apical direction z- via the support structure 4 onto the surface portion 9 of the jaw bone 3.

In the illustrated embodiments, the frame 10 has a rectangular profile comprising a base wall 24c and side walls 24a, 24b extending from the base wall 24c in the direction of the axes z of the crowns 11 towards the support structures 4. The crowns 11 are fixed to and supported by the base wall 24c. The frame 10 may have a different profile, such as a U-shaped profile.

The frame 10 is configured to transfer and distribute forces from the crowns 11 to the support structures 4 during biting or mastication. The distribution of forces decreases the pressure on the jaw bone 3.

The axes z of the crowns 11 and the mounting elements 6 are parallel to each other and aligned to the coronal direction z+ or the apical direction z-.

Each support structure 4 comprises a central portion 4a and lateral portions 4b extending from the central portion 4a in apical direction z-, wherein the mounting element 6 extends from the central portion 4a in coronal direction z+ and wherein the central portion 4a is configured to rest on the jaw bone 3 and the lateral portions 4b are configured to embrace a portion of the jaw bone 3.

In a preferred embodiment, each support structure 4 comprises a contact surface 19 configured to conform with the surface portion 9 of the jaw bone 3. Thus, the biting force is transferred via the contact surface 19 of the support structure 4 onto the surface portion 9 of the jaw bone 3.

The support structure 4 may be manufactured by generating a three-dimensional model of a surface portion 9 of a jaw bone 3 of a patient and subsequently forming the support structure 4 with a contact surface 19 conforming with the surface portion 9 of the jaw bone 3. For example, a three-dimensional model of a surface portion 9 of a jaw bone 3 may be obtained by X-ray computed tomography and the support structure 4 with the contact surface 19 may be formed using computer-aided manufacturing based on the three-dimensional model.

In a preferred embodiment, the dental implant 2 is a subperiosteal implant, i.e., the support structure 4 is configured to be partially implanted on the surface of the bone underneath the periosteum. For simplicity, the periosteum is not shown in the figures.

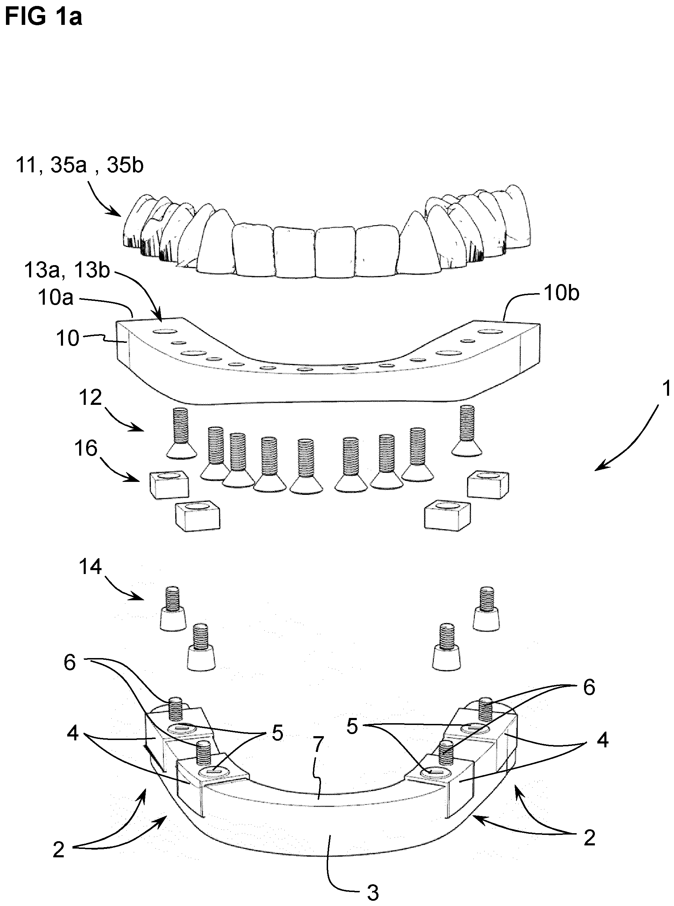

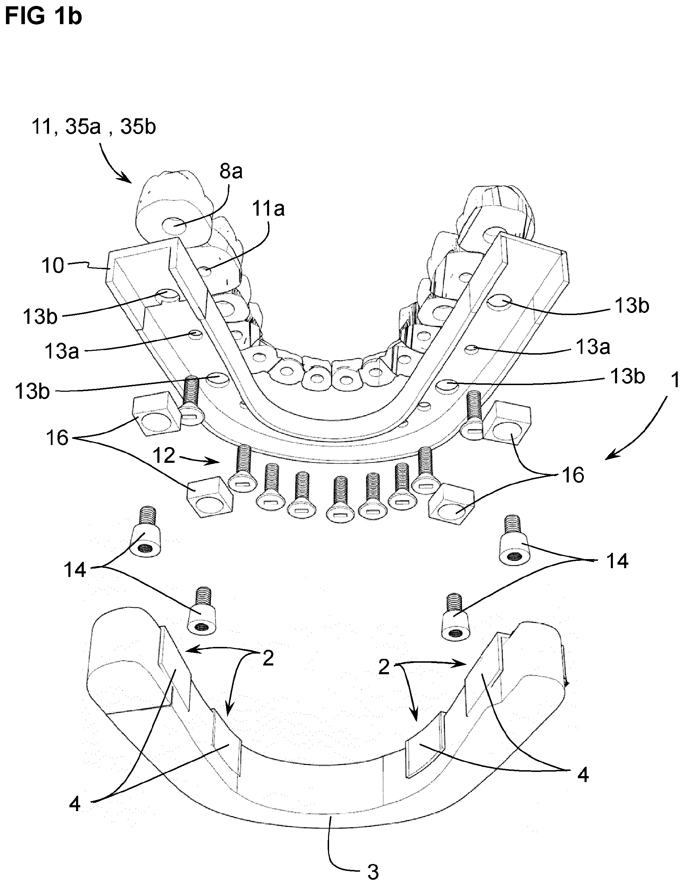

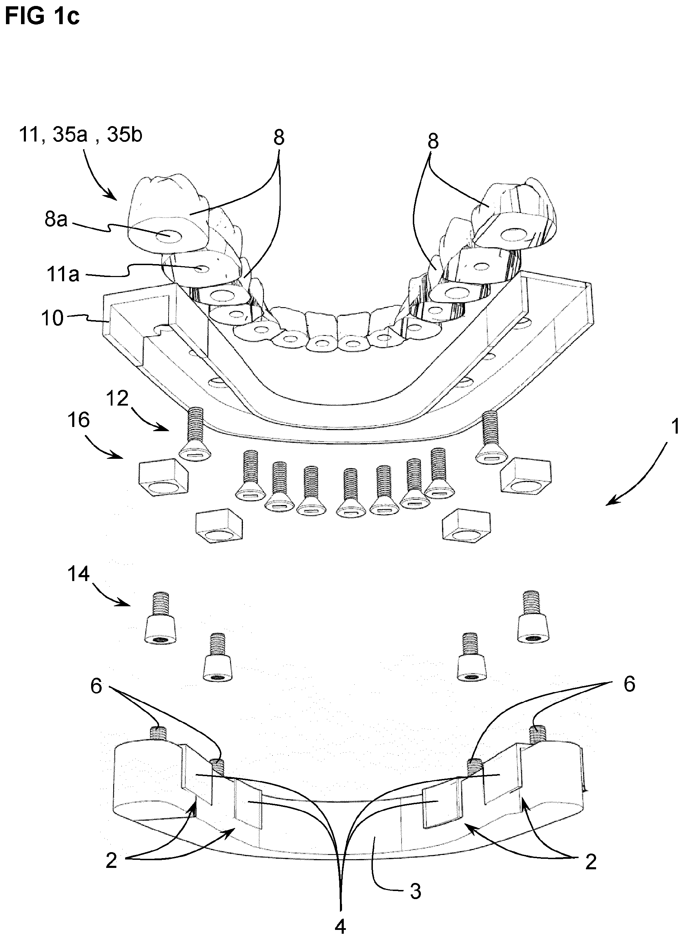

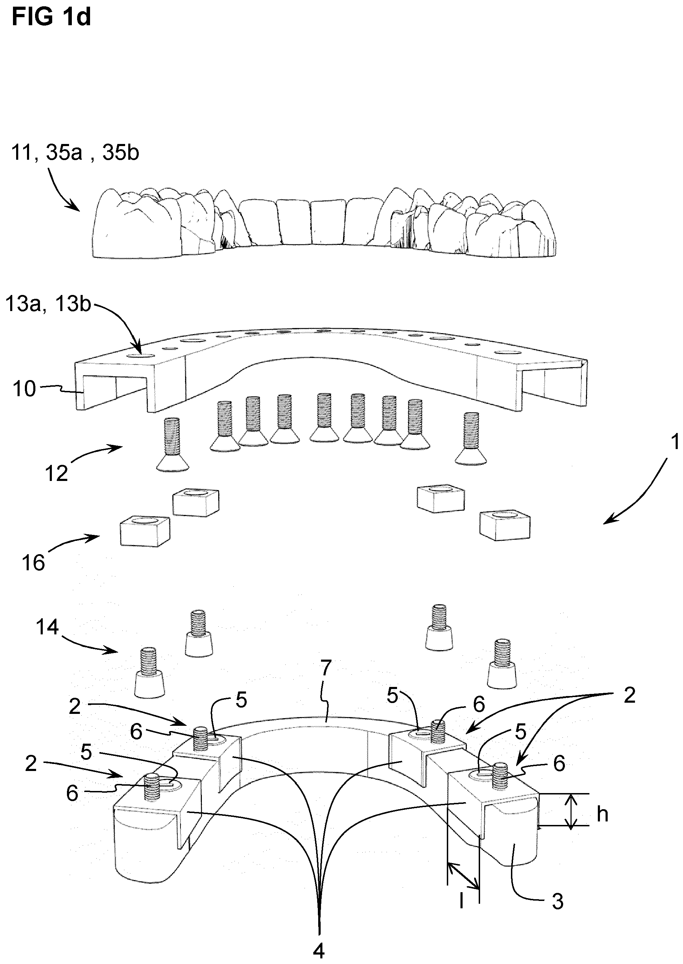

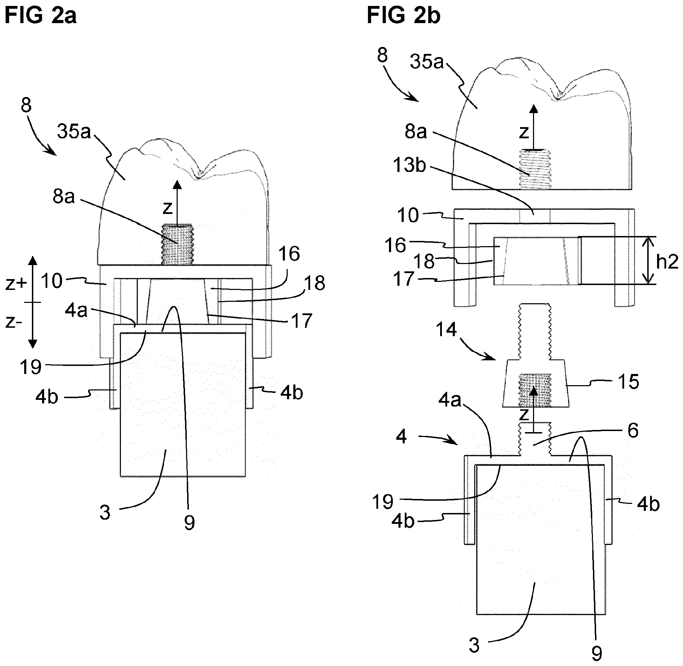

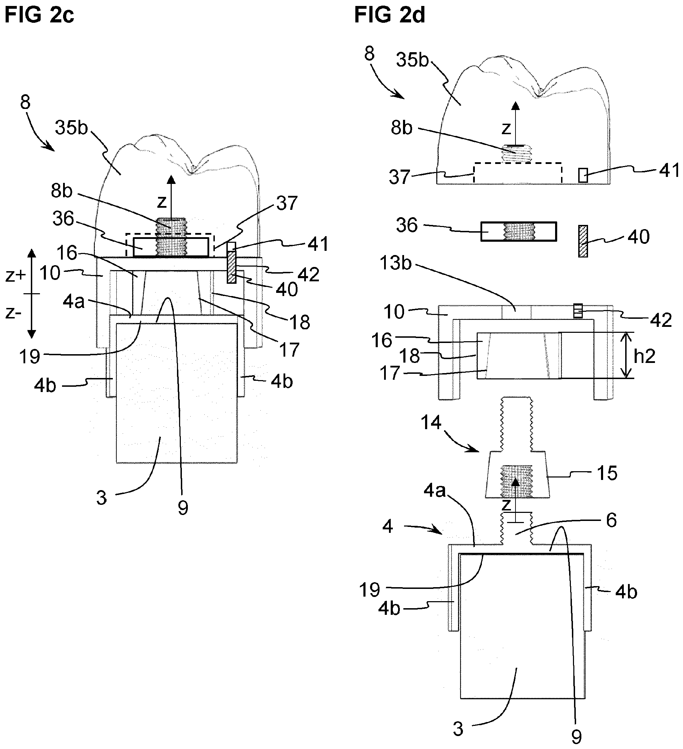

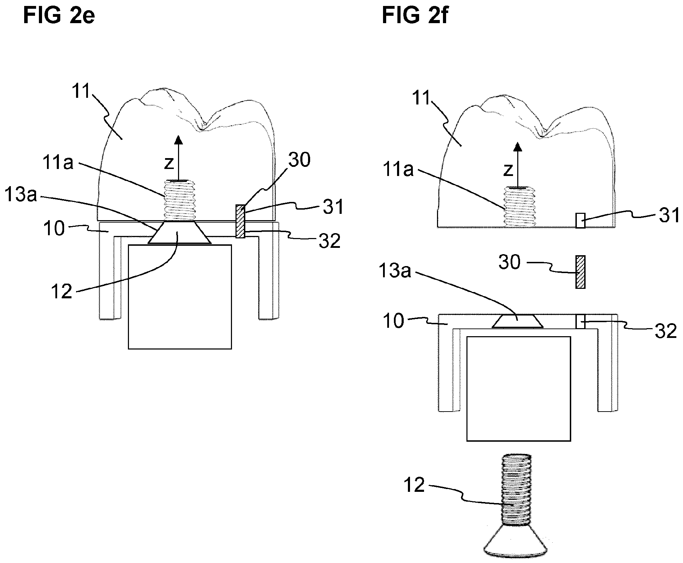

The support structure 4 is intended to be partially embedded in the gingiva 25. For example, at least the lateral portions 4b of the support structure 4 are intended to be embedded in the gingiva 25. For simplicity, the gingiva 25 is not shown in figures 1 and 2.

Preferably, each of the support structures 4 has a length I along a ridge 7 of the jaw bone 3 perpendicular to the axis z of the mounting element 6 of at least 10 mm, in particular at least 20 mm, for example 22 mm. The support structures 4 may have different lengths. For example, two support structures 4 may have a length of 12 mm and two support structures 4 may have a length of 22 mm. Longer support structures 4 may be fixed with a larger number of implant screws 5 in the jaw bone 3. For example, shorter support structures 4 are fixed with one implant screw and longer support structures 4 are fixed with two implant screws in the jaw bone.

In a preferred embodiment, the at least one implant screw 5 has a diameter between 2 and 3 mm. The at least one implant screw 5 can be placed anywhere in the jaw bone and does not need to be placed into a dental alveolus. For example, the at least one implant screw 5 is intended to be placed between two dental alveoli.

Preferably, each of the support structures 4 has a height h along the axis z of the mounting element 6 of at least 5 mm, preferably at least 10 mm.

In the illustrated embodiments, the mounting element 6 of each support structure 4 is a threaded rod with an external thread integrally formed with the support structure 4. An extension screw 14 is mounted on each mounting element 6.

In alternative embodiments of the invention, no extension screw 14 is intended to be mounted on each mounting element 6.

In further alternative embodiments of the invention, the mounting element of each support structure 4 is a screw or a threaded rod with an internal thread.

The dental prosthesis 1 further comprises matching mounting elements 8 configured to cooperate with the mounting elements 6 of the support structures 4 for mounting the frame 10 to the support structures 4. In the embodiments illustrated in figures 1a-1d and 2a-2b, each of the matching mounting elements 8 of the frame is a crown 35a with an internal thread 8a.

In preferred embodiments illustrated in figures 2c-2d, each matching mounting element 8 comprises a screw nut 36 for fixing the frame 10 to the support structures 4. In these illustrated embodiments, the screw nut 36 cooperates with the external thread of the extension screw 14. Each of the matching mounting elements 8 further comprises a crown 35b with an internal thread 8b configured to cooperate with the external thread of the extension screw 14 for fixing the crown 35b to the frame 10. The crown 35b further comprises a recess 37 for receiving the screw nut 36 when the crown 35b is fixed to the frame 10.

In alternative embodiments, there is no extension screw, and the screw nut 36 and the internal thread 8b of the crown 35b cooperate with the external thread of the mounting element 6.

In alternative embodiments of the invention (not shown in the figures), each of the matching mounting elements may be a screw engaging with the internal thread of a threaded rod of a mounting element.

The frame 10 comprises through holes 13a for fixing the crowns 11 to the frame 10 and through holes 13b for mounting the frame 10 to the support structures 4. The mounting elements 6 of the support structures 4 or the extension screws 14 pass through the through holes 13b for mounting the frame 10 to the support structures 4.

In a preferred embodiment, the diameter of the through holes 13b for the mounting elements 6 is at least 1 mm and at most 2 mm larger than the diameter of the mounting elements 6 or extension screws 14. Thus, the position and orientation of the frame 10 may be adjusted in the plane perpendicular to the axes z of the crowns with respect to the positions of the support structures 4.

In a preferred embodiment, each of the support structures 4 and the at least one implant screw 5 are made of titanium or a titanium alloy. Each of the support structures 4 and/or each of the at least one implant screw 5 may be made of porous titanium or a porous titanium alloy.

In the illustrated embodiments, each of the plurality of crowns 11 comprises an internal thread 11a and is removably fixed to the frame 10 by a screw 12 passing through one of the through holes 13a in the frame 10. One or more crowns 11 can be separately replaced when damaged.

In a preferred embodiment, each screw 12 has a conical head and each of the through holes 13a for fixing the crowns 11 to the frame 10 has a conical bore or chamfering for self-centering the screw 12.

In a preferred embodiment, each crown 11 is locked or lockable against rotation about the axis z by a locking mechanism. Preferably, the locking mechanism is configured to lock the crown 11 at a predetermined rotation angle with respect to the frame 10. For example, the locking mechanism is formed by an elastic pin 30 placed between the crown 11 and the frame 10 and inserted into an opening 31 in the crown 11 parallel to the axis z and into an opening 32 in the frame 10 (as illustrated in figures 2e and 2f).

Additionally, each matching mounting element 8 may be locked or lockable against rotation about the axis z by a locking mechanism. In the embodiments illustrated in figures 2c and 2d, the locking mechanism comprises a spring-loaded device 40, such as a spring ball plunger, installed in an internal thread 42 in the frame 10. The crown 35b comprises a detent hole 41 for the ball of the spring ball plunger to releasably lock the crown 35b at a predetermined rotation angle.

In the illustrated embodiments, the dental prosthesis comprises spacers 16 placed between the support structures 4 and the frame 10, wherein the mounting elements 6 and extension screws 14 pass through holes 17 in the spacers 16. The spacers 16 may have different heights h2 to account for different distances between the support structures 4 and the frame 10 and correctly position the frame in the direction of the axes z of the crowns 11. The heights h2 of the spacers 16 and corresponding heights of mounting elements 6 may be calculated based on the three-dimensional model of the surface portions 9 of the jaw bone 3.

Each spacer 16 may comprise a first plane surface configured to abut a plane surface of the base wall 24c of the frame 10 perpendicular to the axes z of the crowns 11. Each spacer 16 may comprise a second plane surface configured to abut a plane surface of the central portion 4a of the support structure 4.

In the illustrated embodiments, each extension screw 14 comprises a conical portion 15 and the hole in each spacer 16 is a conical hole 17 configured to conform with the conical portion 15 of the extension screw 14 mounted on each mounting element 6.

In alternative embodiments of the invention without extension screws 14 mounted on each mounting element 6, the hole in each spacer 16 is a conical hole 17 configured to conform with a conical portion integrally formed on each mounting element 6 or with a conical portion of a conical element mounted on each mounting element 6. The conical element mounted on each mounting element 6 may further comprise a cylindrical portion arranged at an end towards the mounting element 6.

Instead of adjusting the heights h2 of the spacers 16, the distances between the support structures 4 and the frame 10 may be corrected by different positions in the z-direction of the conical portions 15 of the extension screws 14, the conical portions integrally formed on the mounting elements 6 or the conical portions of the conical elements mounted on the mounting elements 6. For example, a cylindrical portion with a different height in the z-direction may be arranged on each extension screws 14, each mounting element 6 or each conical element between the conical portion and the support structure 4. Preferably, the cylindrical and conical portions are integrally formed.

The conical portions 15 and conical holes 17 may have an opening angle of 30°.

In a preferred embodiment, a width of each spacer 16 between lateral surfaces 18 is smaller than an inner distance between the side walls 24a, 24b of the frame 10, such that the position and orientation of the frame 10 may be adjusted in the plane perpendicular to the axes z of the crowns with respect to the positions of the support structures 4.

According to illustrated embodiments of the invention, the dental prosthesis comprises a cleaning system 20 comprising at least one tube 21a, 21b extending along the frame 10 in a plane perpendicular to the axes z of the crowns 11 from a first end 10a of the frame 10 to a second end 10b of the frame 10, the at least one tube 21a, 21b comprising an inlet 23 and a plurality of nozzles 22.

The cleaning system 20 further comprises guiding elements for the at least one tube 21a, 21b. In the illustrated embodiments, the guiding elements are integrated into the spacers 16, i.e., the at least one tube 21a, 21b is held by and guided by the spacers 16. For example, the at least one tube 21a, 21b may pass through holes in the spacers 16. The at least one tube 21a, 21b may have an outer diameter of 2 mm and may be made of a plastic such as nylon or by a metal such as steel.

Preferably, each of the at least one tube 21a, 21b has at least ten nozzles 22. At least a part of the nozzles 22 is directed towards the the gingiva 25 of the patient (i.e., essentially oriented in apical direction z-) for cleaning the gingiva 25 of the patient while the dental prosthesis 1 is installed in the mouth of the patient. A part of the nozzles 22 may be oriented in one or more directions different from the apical direction z- and configured to clean a portion of the surface of the frame 10 facing the gingiva 25. The cleaning system 20 facilitates a self-dependent cleaning of the dental prosthesis 1 by the patient.

The inlet(s) 23 of the at least one tube 21a, 21b may be positioned at the first end 10a of the frame 10 or the second end 10b of the frame 10. The inlet(s) 23 of the at least one tube 21a, 21b are intended to be connected to a source of a fluid, such as a pressurized gas, in particular pressurized air or a liquid, in particular water or a dental cleaning fluid. The cleaning system 20 may comprise a connector (not shown in the figures) for connecting the source of the fluid to the inlet(s) of the at least one tube 21a, 21b.

In a preferred embodiment, the at least one tube comprises an inner tube 21a and an outer tube 21b. The inner tube 21a and the outer tube 21b are essentially parallel to each other.

The inner tube 21a is positioned adjacent the lingual side wall 24a of the frame 10. The outer tube 21b is positioned adjacent the facial side wall 24b of the frame 10.

In an alternative embodiment, the dental prosthesis comprises a cleaning system 20 comprising at least one channel formed in the frame 10. The at least one channel extends along the frame 10 perpendicular to the axes z of the crowns 11 from a first end 10a of the frame 10 to a second end 10b of the frame 10. Each of the at least one channel comprises an inlet 23 and a plurality of nozzles 22.

In the illustrated embodiments, the dental prosthesis is a full dental prosthesis. In alternative embodiments, the dental prosthesis is a partial dental prosthesis comprising a single dental implant or a plurality of dental implants.

An embodiment of the invention comprises a full dental prosthesis for the lower jaw and a full dental prosthesis for the upper jaw. A surface of each crown of the dental prosthesis for the lower jaw conforms with a surface of a corresponding crown of the dental prosthesis for the upper jaw. A surface of each matching mounting element of the dental prosthesis for the lower jaw conforms with a surface of a corresponding matching mounting element of the dental prosthesis for the upper jaw. Two rear matching mounting elements of the dental prosthesis for the lower jaw may have rotationally symmetric convex surfaces conforming with rotationally symmetric concave surfaces of corresponding rear matching mounting elements of the dental prosthesis for the upper jaw. Two front matching mounting elements of the dental prosthesis for the lower jaw may have planar surfaces conforming with planar surfaces of corresponding front matching mounting elements of the dental prosthesis for the upper jaw. The matching mounting elements may be slightly taller than the crowns such that only the surfaces of the corresponding matching mounting elements can be brought into contact but the surfaces of corresponding crowns cannot be brought into contact.

### List of references

Dental prosthesis 1
   Dental implant 2
      Support structure 4
         Central portion 4a
         Lateral portions 4b
         Contact surface 19
         Length I
         Height h
      Implant screw 5
      Mounting element 6
   Crown 11
      Screw 12
      Internal thread 11a
      Matching mounting element 8
         Crown 35a, 35b
            Internal thread 8a, 8b
            Recess 37
         Screw nut 36
   Frame 10
      Base wall 24c
      Side wall 24a, 24b
      Positioning elements
         Through hole 13a, 13b
         Extension screw 14
            Conical portion 15
         Spacer 16
            Conical hole 17
            Lateral surfaces 18
            Height h2
         Locking mechanism
            Elastic pin 30
            Opening 31, 32
            Spring-loaded device 40
            Detent hole 41
            Internal thread 42
   Cleaning system 20
      Tube 21a, 21b
         Nozzle 22
         Inlet 23
      Guiding element (spacer 16)
Jaw bone 3
   Ridge 7
   Surface portion 9
Gingiva 25

## Claims

1. Dental prosthesis (1) comprising a plurality of crowns (11) fixed to a frame (10) and a plurality of dental implants (2), each dental implant (2) comprising a support structure (4) for supporting the frame (10) on a surface portion (9) of a jaw bone (3) of a patient, at least one implant screw (5) for fixing the support structure (4) to the jaw bone (3) and a mounting element (6) for mounting the frame (10) to the support structure (4), wherein the plurality of dental implants (2) is configured to transfer a force from each of the mounting elements (6) in apical direction z- via the support structure (4) onto the surface portion (9) of the jaw bone (3), **characterized by**, comprising a cleaning system (20) comprising at least one tube (21a, 21b) or at least one channel, the at least one tube (21a, 21b) or at least one channel formed in the frame (10) extending along the frame (10) perpendicular to an axis z of the mounting elements (6) from a first end of the frame (10) to a second end of the frame (10), the at least one tube (21a, 21b) or the at least one channel formed in the frame (10) comprising an inlet (23) and a plurality of nozzles (22).

2. Dental prosthesis (1) according to claim 1, wherein each support structure (4) comprises a central portion (4a) and lateral portions (4b) extending from the central portion (4a) in apical direction z-, wherein the mounting element (6) extends from the central portion (4a) in coronal direction z+ and wherein the central portion (4a) is configured to rest on the jaw bone (3) and the lateral portions (4b) are configured to embrace a portion of the jaw bone (3).

3. Dental prosthesis (1) according to any preceding claim, wherein each of the support structures (4) has a length I along a ridge (7) of the jaw bone (3) of at least 10 mm, in particular at least 20 mm, for instance 22 mm.

4. Dental prosthesis (1) according to any preceding claim, wherein each of the support structures (4) has a height h along an axis z of the plurality of crowns (11) of at least 5 mm, preferably at least 10 mm.

5. Dental prosthesis (1) according to any preceding claim, wherein the mounting element (6) of each support structure (4) is a screw or a threaded rod with an internal or external thread.

6. Dental prosthesis (1) according to the directly preceding claim, further comprising matching mounting elements (8) configured to cooperate with the mounting elements (6) of the support structures (4) for mounting the frame (10) to the support structures (4).

7. Dental prosthesis (1) according to the directly preceding claim, wherein the mounting element (6) of each support structure (4) is a screw or a threaded rod with an external thread and each of the matching mounting elements (8) comprises a crown (35a) with an internal thread (8a) or a screw nut (36).

8. Dental prosthesis (1) according to any preceding claim, wherein each of the plurality of crowns (11) comprises an internal thread (11a) and is removably fixed to the frame (10) by a screw (12).

9. Dental prosthesis (1) according to any preceding claim, comprising spacers (16) placed between the support structures (4) and the frame (10), wherein the mounting elements (6) pass through holes (17) in the spacers (16).

10. Dental prosthesis (1) according to the directly preceding claim, wherein the hole in each spacer (16) is a conical hole (17) configured to conform with a conical portion formed on each mounting element (6) or with a conical portion (15) of an extension screw (14) or with a conical portion of a conical element mounted on each mounting element (6).

11. Dental prosthesis (1) according to the directly preceding claim, wherein each support structure (4) is integrally formed with the mounting element (6) and the conical portion formed on the mounting element (6).

12. Dental prosthesis (1) according to any one of the three directly preceding claims, wherein the frame (10) comprises a plane surface and each spacer (16) comprises a plane surface configured to abut the plane surface of the frame (10).

13. Dental prosthesis (1) according to any preceding claim, wherein the at least one tube (21a, 21b) is held by the spacers (16).

14. Method for manufacturing a dental prosthesis (1) according to any preceding claim, comprising the steps of
- generating a three-dimensional model of a surface of a jaw bone (3) of a patient; and
- forming each support structure (4) with a contact surface (19) conforming with a different surface portion (9) of the jaw bone (3).

15. Method according to the directly preceding claim, further comprising the step of
- calculating a height of each mounting element (6) based on the three-dimensional model of the surface of the jaw bone (3).

## Patentansprüche

1. Zahnprothese (1), die eine Vielzahl von Kronen (11), die an einem Rahmen (10) befestigt sind, und eine Vielzahl von Zahnimplantaten (2) umfasst, wobei jedes Zahnimplantat (2) zum Stützen des Rahmens (10) auf einem Flächenabschnitt (9) eines Kieferknochens (3) eines Patienten eine Stützstruktur (4), zum Befestigen der Stützstruktur (4) am Kieferknochen (3) mindestens eine Implantatschraube (5) sowie zum Montieren des Rahmens (10) an der Stützstruktur (4) ein Montageelement (6) umfasst, wobei die Vielzahl von Zahnimplantaten (2) dazu ausgelegt ist, von jedem der Montageelemente (6) via die Stützstruktur (4) eine Kraft in einer apikalen Richtung z- auf den Flächenabschnitt (9) des Kieferknochens (3) zu übertragen, **dadurch gekennzeichnet, dass** sie ein Reinigungssystem (20) umfasst, das mindestens ein Rohr (21a, 21b) oder mindestens einen Kanal umfasst, wobei das mindestens eine Rohr (21a, 21b) oder der mindestens eine Kanal im Rahmen (10) gebildet ist und sich entlang des Rahmens (10) senkrecht zu einer Achse z der Montageelemente (6) von einem ersten Ende des Rahmens (10) zu einem zweiten Ende des Rahmens (10) erstreckt, wobei das mindestens eine Rohr (21a, 21b) oder der mindestens eine Kanal, die im Rahmen (10) gebildet sind, einen Einlass (23) und eine Vielzahl von Düsen (22) umfasst.

2. Zahnprothese (1) nach Anspruch 1, wobei jede Stützstruktur (4) einen zentralen Abschnitt (4a) sowie seitliche Abschnitte (4b) umfasst, die sich vom zentralen Abschnitt (4a) in apikaler Richtung z- erstrecken, wobei sich das Montageelement (6) vom zentralen Abschnitt (4a) in koronaler Richtung z+ erstreckt und wobei der zentrale Abschnitt (4a) dazu ausgelegt ist, auf dem Kieferknochen (3) zu ruhen, und die seitlichen Abschnitte (4b) dazu ausgelegt sind, einen Abschnitt des Kieferknochens (3) zu umschließen.

3. Zahnprothese (1) nach einem der vorhergehenden Ansprüche, wobei jede der Stützstrukturen (4) entlang einer Erhöhung (7) des Kieferknochens (3) eine Länge l von mindestens 10 mm, insbesondere mindestens 20 mm, beispielsweise 22 mm aufweist.

4. Zahnprothese (1) nach einem der vorhergehenden Ansprüche, wobei jede der Stützstrukturen (4) entlang einer Achse z der Vielzahl von Kronen (11) eine Höhe h von mindestens 5 mm, vorzugsweise mindestens 10 mm aufweist.

5. Zahnprothese (1) nach einem der vorhergehenden Ansprüche, wobei das Montageelement (6) von jeder Stützstruktur (4) eine Schraube oder eine Gewindestange mit einem Innen- oder Außengewinde ist.

6. Zahnprothese (1) nach dem direkt vorhergehenden Anspruch, die ferner übereinstimmende Montageelemente (8) umfasst, die dazu ausgelegt sind, zum Montieren des Rahmens (10) an den Stützstrukturen (4) mit den Montageelementen (6) der Stützstrukturen (4) zusammenzuwirken.

7. Zahnprothese (1) nach dem direkt vorhergehenden Anspruch, wobei das Montageelement (6) von jeder Stützstruktur (4) eine Schraube oder eine Gewindestange mit einem Außengewinde ist und jedes der übereinstimmenden Montageelemente (8) eine Krone (35a) mit einem Innengewinde (8a) oder einer Schraubenmutter (36) umfasst.

8. Zahnprothese (1) nach einem der vorhergehenden Ansprüche, wobei jede der Vielzahl von Kronen (11) ein Innengewinde (11a) umfasst und mit einer Schraube (12) entfernbar am Rahmen (10) befestigt ist.

9. Zahnprothese (1) nach einem der vorhergehenden Ansprüche, die Abstandhalter (16) umfasst, die zwischen den Stützstrukturen (4) und dem Rahmen (10) platziert sind, wobei die Montageelemente (6) durch die Löcher (17) in den Abstandhaltern (16) verlaufen.

10. Zahnprothese (1) nach dem direkt vorhergehenden Anspruch, wobei das Loch in jedem Abstandhalter (16) ein konisches Loch (17) ist, das dazu ausgelegt ist, mit einem konischen Abschnitt, der an jedem Montageelement (6) gebildet ist, oder mit einem konischen Abschnitt (15) einer Verlängerungsschraube (14) oder mit einem konischen Abschnitt eines konischen Elements, das an jedem Montageelement (6) montiert ist, konform zu sein.

11. Zahnprothese (1) nach dem direkt vorhergehenden Anspruch, wobei jede Stützstruktur (4) mit dem Montageelement (6) und dem am Montageelement (6) gebildeten konischen Abschnitt integral gebildet ist.

12. Zahnprothese (1) nach einem der drei direkt vorhergehenden Ansprüche, wobei der Rahmen (10) eine plane Fläche umfasst und jeder Abstandhalter (16) eine plane Fläche umfasst, die dazu ausgelegt ist, an der planen Fläche des Rahmens (10) anzuliegen.

13. Zahnprothese (1) nach einem der vorhergehenden Ansprüche, wobei das mindestens eine Rohr (21a, 21b) von den Abstandhaltern (16) gehalten wird.

14. Verfahren zum Herstellen einer Zahnprothese (1) nach einem der vorhergehenden Ansprüche, das die folgenden Schritte umfasst
- Erzeugen eines dreidimensionalen Modells einer Fläche eines Kieferknochens (3) eines Patienten; und
- Bilden von jeder Stützstruktur (4) mit einer Kontaktfläche (19), die mit einem anderen Flächenabschnitt (9) des Kieferknochens (3) konform ist.

15. Verfahren nach dem direkt vorhergehenden Anspruch, das ferner den folgenden Schritt umfasst
- Berechnen einer Höhe von jedem Montageelement (6) auf Basis des dreidimensionalen Modells der Fläche des Kieferknochens (3).

## Revendications

1. Prothèse dentaire (1) comprenant une pluralité de couronnes (11) fixées à un cadre (10) et une pluralité d'implants dentaires (2), chaque implant dentaire (2) comprenant une structure de support (4) pour supporter le cadre (10) sur une partie de surface (9) d'un os de la mâchoire (3) d'un patient, au moins une vis d'implant (5) pour fixer la structure de support (4) à l'os de la mâchoire (3) et un élément de montage (6) pour monter le cadre (10) sur la structure de support (4), dans laquelle la pluralité d'implants dentaires (2) est configurée pour transférer une force à partir de chacun des éléments de montage (6) dans la direction apicale z-, via la structure de support (4), sur la partie de surface (9) de l'os de la mâchoire (3), **caractérisée en ce qu'**elle comprend un système de nettoyage (20) comprenant au moins un tube (21a, 21b) ou au moins un canal, le au moins un tube (21a, 21b) ou le au moins un canal formé dans le cadre (10) s'étendant le long du cadre (10) perpendiculaire à un axe z des éléments de montage (6) à partir d'une première extrémité du cadre (10) jusqu'à une seconde extrémité du cadre (10), le au moins un tube (21a, 21b) ou le au moins un canal formé dans le cadre (10) comprenant une entrée (23) et une pluralité de buses (22).

2. Prothèse dentaire (1) selon la revendication 1, dans laquelle chaque structure de support (4) comprend une partie centrale (4a) et des parties latérales (4b) s'étendant à partir de la partie centrale (4a) dans la direction apicale z-, dans laquelle l'élément de montage (6) s'étend à partir de la partie centrale (4a) dans la direction coronaire z+ et dans laquelle la partie centrale (4a) est configurée pour s'appuyer sur l'os de la mâchoire (3) et les parties latérales (4b) sont configurées pour englober une partie de l'os de la mâchoire (3).

3. Prothèse dentaire (1) selon l'une quelconque des revendications précédentes, dans laquelle chacune des structures de support (4) a une longueur l le long d'une crête (7) de l'os de la mâchoire (3) d'au moins 10 mm, en particulier d'au moins 20 mm, par exemple de 22 mm.

4. Prothèse dentaire (1) selon l'une quelconque des revendications précédentes, dans laquelle chacune des structures de support (4) a une hauteur h le long d'un axe z de la pluralité de couronnes (11) d'au moins 5 mm, de préférence d'au moins 10 mm.

5. Prothèse dentaire (1) selon l'une quelconque des revendications précédentes, dans laquelle l'élément de montage (6) de chaque structure de support (4) est une vis ou une tige filetée avec un filetage interne ou externe.

6. Prothèse dentaire (1) selon la revendication directement précédente, comprenant en outre des éléments de montage correspondants (8) configurés pour coopérer avec les éléments de montage (6) des structures de support (4) pour monter le cadre (10) sur les structures de support (4).

7. Prothèse dentaire (1) selon la revendication directement précédente, dans laquelle l'élément de montage (6) de chaque structure de support (4) est une vis ou une tige filetée avec un filetage externe et chacun des éléments de montage correspondants (8) comprend une couronne (35a) avec un filetage interne (8a) ou un écrou de vis (36).

8. Prothèse dentaire (1) selon l'une quelconque des revendications précédentes, dans laquelle chacune de la pluralité de couronnes (11) comprend un filetage interne (11a) et est fixée, de manière amovible, sur le cadre (10) par une vis (12).

9. Prothèse dentaire (1) selon l'une quelconque des revendications précédentes, comprenant des dispositifs d'espacement (16) placés entre les structures de support (4) et le cadre (10), dans laquelle les éléments de montage (6) passent à travers les trous (17) dans les dispositifs d'espacement (16).

10. Prothèse dentaire (1) selon la revendication directement précédente, dans laquelle le trou dans chaque dispositif d'espacement (16) est un trou conique (17) configuré pour se conformer à une partie conique formée sur chaque élément de montage (6) ou à une partie conique (15) d'une vis d'extension (14) ou à une partie conique d'un élément conique monté sur chaque élément de montage (6).

11. Prothèse dentaire (1) selon la revendication directement précédente, dans laquelle chaque structure de support (4) est formée, de manière solidaire, avec l'élément de montage (6) et la partie conique formée sur l'élément de montage (6).

12. Prothèse dentaire (1) selon l'une quelconque des trois revendications directement précédentes, dans laquelle le cadre (10) comprend une surface plane et chaque dispositif d'espacement (16) comprend une surface plane configurée pour venir en butée contre la surface plane du cadre (10).

13. Prothèse dentaire (1) selon l'une quelconque des revendications précédentes, dans laquelle le au moins un tube (21a, 21b) est maintenu par les dispositifs d'espacement (16).

14. Procédé pour fabriquer une prothèse dentaire (1) selon l'une quelconque des revendications précédentes, comprenant les étapes consistant à :
générer un modèle tridimensionnel d'une surface d'un os de la mâchoire (3) d'un patient ; et
former chaque structure de support (4) avec une surface de contact (19) se conformant à une partie de surface (9) différente de l'os de la mâchoire (3).

15. Procédé selon la revendication directement précédente, comprenant en outre l'étape consistant à :
calculer une hauteur de chaque élément de montage (6) sur la base du modèle tridimensionnel de la surface de l'os de la mâchoire (3).
